# EUROPEAN PATENT APPLICATION

(11) **EP 4 372 282 A1**
(43) Date of publication of application: **22.05.2024**
(21) Application number: 23210608.8
(22) Date of filing: 17.11.2023
(51) Int. Cl.: F24C 3/12, A47J 37/07, F23N 1/00, F23N 5/26

(54) **COOKING APPLIANCE WITH FUEL SHUTOFF SYSTEM**

(30) Priority: 21.11.2022 US 202263426963 P; 03.10.2023 US 202318480122
(71) Applicant: Whirlpool Corporation, Benton Harbor, MI 49022 (US)
(72) Inventor: DE BORBA, Daniel Fernando, Joinville (BR); OSPINA, Santiago, Joinville (BR); SCREMIN, Felipe, Varese (IT)
(74) Representative: PGA S.p.A., Milano, Succursale di Lugano

(57) **Abstract**

A cooking appliance (10) includes a plurality of burners (14), a plurality of knobs (24), and a fuel shutoff system (42). The burners (14) are disposed on a cooktop (12). Each knob (24) is configured to open and close one of a plurality of supply valves (28) to provide fuel to one of the burners (14). The fuel shutoff system (42) is disposed below one of the knobs (24). The fuel shutoff system (42) is configured to starve each supply valve (28) and each burner (14) of fuel when activated. The fuel shutoff system (42) is configured facilitate delivery of fuel to each supply valve (28) and each burner (14) of fuel when deactivated.

## Description

### FIELD OF DISCLOSURE

The present disclosure relates to cooktops and a fuel delivery system for cooktops.

### DESCRIPTION OF RELATED ART

A cooking appliance is used to cook meals and other foodstuffs on a cooktop or within an oven.

### SUMMARY

A cooking appliance includes a plurality of burners, a plurality of knobs, and a fuel shutoff system. The burners are disposed on a cooktop. Each knob is configured to open and close one of a plurality of supply valves to provide fuel to one of the burners. The fuel shutoff system is disposed below one of the knobs. The fuel shutoff system is configured to simultaneously starve each supply valve and each burner of fuel when activated. The fuel shutoff system is configured simultaneously facilitate delivery of fuel to each supply valve and each burner of fuel when deactivated.

In one or more embodiments, the fuel shutoff system includes a dial that is positioned concentrically with one of the knobs.

According to some embodiments, the dial is configured to transition via rotation to a first position to activate the fuel shutoff system and to a second position to deactivate the fuel shutoff system.

According to at least one embodiment, the fuel shutoff system includes a main valve and a limit switch.

In one or more embodiments, the main valve is configured to close to starve each supply valve and each burner of fuel and to open to facilitate delivery of fuel to each supply valve and each burner.

According to some embodiments, the limit switch is configured to close the main valve when activated and to open the main valve when deactivated.

In at least one embodiment, the dial is configured to engage and activate the limit switch when in the first position and to disengage and deactivate the limit switch when in the second position.

In one or more embodiments, the fuel shutoff system includes a ring disposed around and concentric with the dial, wherein the ring defines a notch.

According to at least one embodiment, the dial includes a protrusion extending radially outward therefrom and into the notch, wherein the protrusion is configured to engage edges of the ring to limit rotational movement of the dial.

According to some embodiments, the dial includes a protrusion extending downward therefrom, wherein the protrusion is configured to engage and disengage the limit switch upon rotation of the dial to activate and deactivate the limit switch, respectively.

A cooking appliance includes a plurality of burners, a plurality of supply valves, a plurality of knobs, a main valve, a switch, a dial, and a controller. Each valve is configured to supply fuel to one of the burners. Each knob is configured to open and close one of the supply valves to provide fuel to one of the burners. The main valve is configured open to facilitate delivery of fuel to each supply valve. The main valve is configured to close to starve each supply valve of fuel. The switch is configured to open and close. The dial is disposed below a first of the knobs. The dial is configured to transition between (i) a first position to engage and close the switch and (ii) a second position to disengage and open the switch. The controller is programmed to, in response to closing the switch via transitioning the dial to the first position, close the main valve. The controller is further programmed to, in response to opening the switch via transitioning the dial to the second position, open the main valve.

According to at least one embodiment, the dial is concentric with the first of the knobs.

According to some embodiments, the dial is configured to transition between the first and second positions via rotation.

In at least one embodiment, a ring disposed around and concentric with the dial, wherein the ring defines a notch.

In one or more embodiments, the dial includes a protrusion extending radially outward therefrom and into the notch, wherein the protrusion is configured to engage edges of the ring to limit rotational movement of the dial.

In one or more embodiments, the ring is further disposed below the first of the knobs.

In at least one embodiment, a top of the ring is concealed by the first of the knobs.

According to some embodiments, the dial includes a protrusion extending downward therefrom, wherein the protrusion is configured to engage and disengage the switch upon rotation of the dial to close and open the switch, respectively.

According to at least one embodiment, a top of the dial is concealed by the first of the knobs.

A fuel shutoff system for cooking appliance includes a shutoff valve, a limit switch, and a dial. The shutoff valve is configured to open to facilitate delivery of fuel to a plurality of burners. The shutoff valve is configured to close to starve each of the burners of fuel. The limit switch is configured to close the shutoff valve when activated. The limit switch is configured to open the shutoff valve when deactivated. The dial is disposed below a control knob to one of the burners. The dial is configured to transition between (i) a first position to engage and activate the limit switch and (ii) a second position to disengage and deactivate the limit switch.

In at least one embodiment, the dial is concentric with the control knob.

According to some embodiments, the dial is configured to transition between the first and second positions via rotation.

In one or more embodiments, a ring disposed around and concentric with the dial, wherein the ring defines a notch.

According to at least one embodiment, the dial includes a protrusion extending radially outward therefrom and into the notch, wherein the protrusion is configured to engage edges of the ring to limit rotational movement of the dial.

According to some embodiments, the ring is further disposed below the control knob.

In at least one embodiment, a top of the ring is concealed by the control knob.

According to at least one embodiment, the dial includes a protrusion extending downward therefrom, wherein the protrusion is configured to engage and disengage the limit switch upon rotation of the dial to activate and deactivate the limit switch, respectively.

In at least one embodiment, a top of the dial is concealed by the control knob.

In one or more embodiments, a controller is programmed to, in response to activating the limit switch via transitioning the dial to the first position, close the shutoff valve.

According to some embodiments, a controller is programmed to, in response to deactivating the limit switch via transitioning the dial to the second position, open the shutoff valve.

The knob that is disposed above the fuel shutoff system advantageously conceals or covers the fuel shutoff system to effectively hide the fuel shutoff system and prevent the fuel shutoff system from being accidentally activated by pets, children, etc. More specifically, the knob that is disposed above the fuel shutoff system conceals or covers the dial, including the first protrusion, to effectively hide the dial and prevent the dial from being bumped or moved, which in turn would accidentally activate the fuel shutoff system.

### BRIEF DESCRIPTION OF THE DRAWINGS

Figure 1 is a front isometric view of a cooking appliance, according to an aspect of the present disclosure;
Figure 2 is a schematic diagram of a fuel delivery system for the cooking appliance;
Figure 3 is a top isometric view of a control knob for one of the burners of the cooking appliance and an associated main fuel shutoff system;
Figure 4 is a bottom isometric view of the control knob for one of the burners of the cooking appliance and the associated main fuel shutoff system;
Figure 5 is a cross-sectional view taken along line 5-5 of Figure 3; and
Figure 6 is a top isometric view of the main fuel shutoff system with the associated control knob removed.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

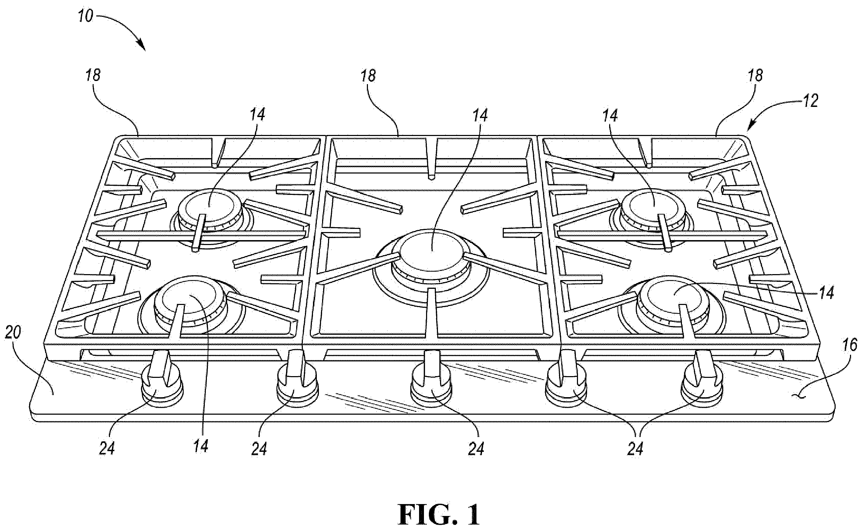

Referring to Figure 1, an appliance 10, such as an oven or stove having a cooktop 12 is illustrated. One or more cooking burners 14 extend from a top or upper surface 16 of the cooking appliance 10. More specifically, the upper surface 16 may be the top or upper surface of the cooktop 12. The appliance 10 is shown in the form of a stand-alone cooking hob but may also be in the form of a range that includes the cooktop 12 and an oven in a single unit. The appliance 10 can be generally similar to known cooking appliances, including the construction and arrangement of the above-mentioned cooking burners 14. However, other cooking burner arrangements may be utilized. For example, the cooking burner arrangement may include one cooking burner 14 or multiple cooking burners 14.

The cooking burners 14 may be of any type and may be used in connection with cooking vessel supports 18. Each cooking vessel support 18 may be positioned over one or more of the burners 14 to support a cooking article or vessel, such as a pan, a pot, or the like, above and/or spaced-apart from the cooking burner 14 with which it is used. In general, fuel-burning burners (e.g., those that rely on combustion of natural or propane gas for the generation of heat) are used in conjunction with the cooking vessel supports 18. Numerous types and configurations of cooking burners that are known or may be developed may be utilized as the cooking burners 14, including various types of "hybrid" burners, which may generate heat by multiple means, including fuel-burning and/or electrical heating. The cooking vessel supports 18 may simply rest on top of the upper surface 16 and may be easily removed to allow for easy access to portions of the cooktop 12 underlying the cooking vessel supports 18, as well as the cooking burners 14, specifically for cleaning or maintenance service.

The cooktop 12 may have a base portion 20 that defines the upper surface 16 and receives the burners 14. The base portion 20 may be similar to known structures for similar components of a cooking appliance 10 and may be of any structure that can sufficiently support the cooking vessel supports 18 and any cooking articles or vessels disposed on the cooking vessel supports 18. The base portion 20 may also be generally structured to provide support and a location for the cooking burners 14 and may conceal the various lines and controls associated with the cooking burners 14. The base portion 20 may be formed from a metal sheet via a stamping or other process, that shapes the base portion 20 into the desired three-dimensional shape. Such metal may be steel, stainless steel, aluminum, or the like, and may be of a gauge high enough to provide structural stability, given the particular material characteristics, without unnecessarily increasing weight or difficulty of the manufacture thereof.

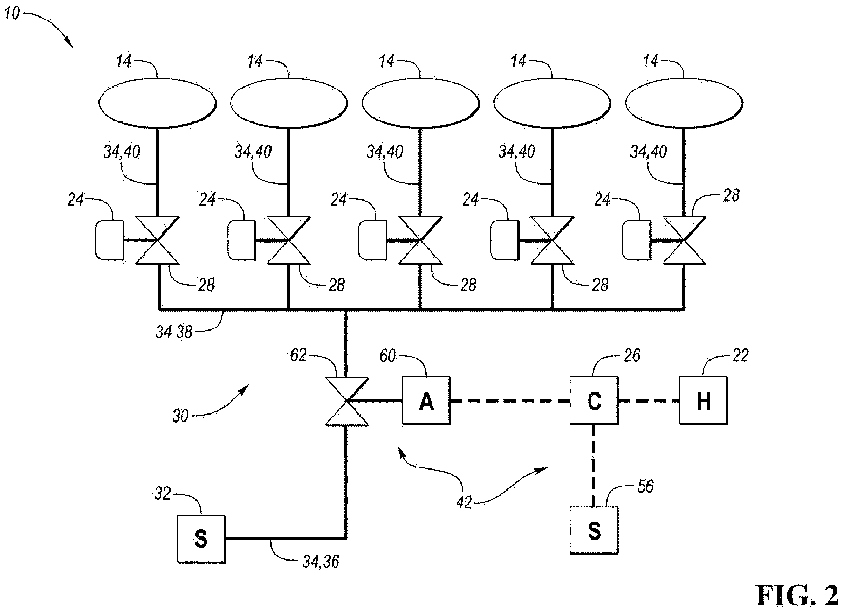

Referring now to Figures 1 and 2, The appliance 10 may include a control panel or human machine interface (HMI) 22. The HMI 22 may include a touchscreen, buttons, dials, or knobs 24 that are configured to operate the burners 14 or oven (if included). More specifically, the touchscreen, buttons, dials, or knobs 24 may be adjusted by a user to select a desired operational setting of the burners 14 or oven (if included). For example, a cooking temperature of the oven may be selected via engagement of the touchscreen, buttons, etc. As another example, each knob 24 may be associated with a particular burner 14 and each knob may be adjusted to adjust a heat setting for the particular associated burner 14 (e.g., an OFF setting, a LOW HEAT setting, a MEDIUM HEAT setting, a HIGH HEAT setting, or any heat setting between the LOW, MEDIUM, or HIGH HEAT settings) by controlling the amount of fuel flowing to each burner 14.

The HMI 22 may communicate the desired operational setting of the burners 14 or oven, set by the user via engagement of the touchscreen, buttons, dials, or knobs 24, to a controller 26, which may then adjust heating elements within the oven or the burners 14 to the desired setting. The controller 26 may include control logic or an algorithm that is configured to adjust heating elements within the oven or the burners 14 to the desired setting based on the desired operational setting of the oven or the burners 14 received from the HMI 22. Alternatively, if the burners 14 are fuel-burning burners, each dial or knob 24 may directly adjust the desired operational setting of a particular burner 14 by opening, closing, or adjusting a position a valve 28 that feeds fuel to the particular burner 14. The HMI 22 may also include a display screen that is configured to display an operating condition, such as a set or current temperature of the oven.

A fuel delivery system 30 may be configured to deliver fuel (e.g., natural gas or propane gas) from a source 32 to the burners 14. The fuel deliver system 30 includes pipes, tubes, or conduits 34 that are configured deliver fuel from the source 32 to the burners 14. The conduits 34 may include a feed line 36 that receives fuel from the source 32, a primary line 38 that receives fuel from the feed line 36, and secondary lines 40 that receive fuel from the primary line 38 and deliver the fuel to the burners 14. The secondary lines 40 may each be parallel to each other. One of the valves 28 may be disposed along each of the secondary lines 40 so that fuel flow to each burner 14 may be controlled separately.

The controller 26 may be part of a larger control system and may be controlled by various other controllers throughout the appliance 10. It should therefore be understood that the controller 26 and one or more other controllers can collectively be referred to as a "controller" that controls various actuators in response to signals from various sensors to control functions of the appliance 10. The controller 26 may include a microprocessor or central processing unit (CPU) in communication with various types of computer readable storage devices or media. Computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the CPU is powered down. Computer-readable storage devices or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller 26 in controlling the appliance 10.

Control logic or functions performed by the controller 26 may be represented by flow charts or similar diagrams in one or more figures. These figures provide representative control strategies and/or logic that may be implemented using one or more processing strategies such as event-driven, interrupt-driven, multi-tasking, multi-threading, and the like. As such, various steps or functions illustrated may be performed in the sequence illustrated, in parallel, or in some cases omitted. Although not always explicitly illustrated, one of ordinary skill in the art will recognize that one or more of the illustrated steps or functions may be repeatedly performed depending upon the particular processing strategy being used. Similarly, the order of processing is not necessarily required to achieve the features and advantages described herein, but is provided for ease of illustration and description.

The control logic may be implemented primarily in software executed by a microprocessorbased controller 26. Of course, the control logic may be implemented in software, hardware, or a combination of software and hardware in one or more controllers depending upon the particular application. When implemented in software, the control logic may be provided in one or more computer-readable storage devices or media having stored data representing code or instructions executed by a computer to control the appliance 10. The computer-readable storage devices or media may include one or more of a number of known physical devices which utilize electric, magnetic, and/or optical storage to keep executable instructions and associated calibration information, operating variables, and the like.

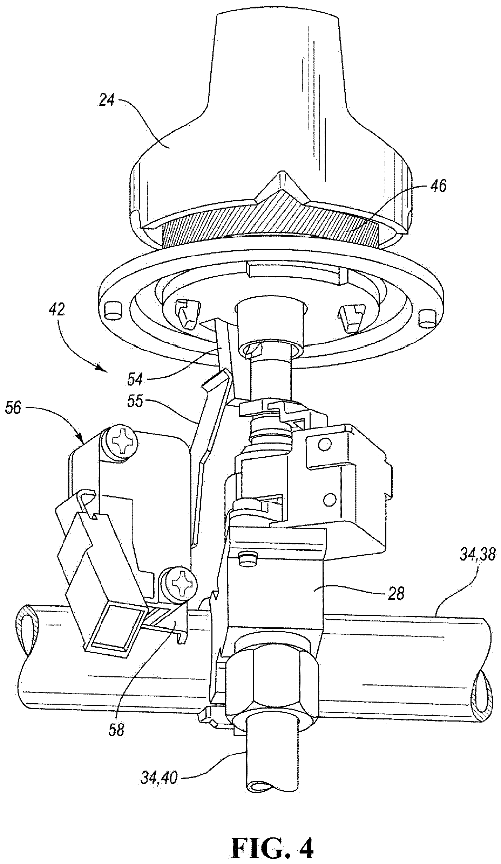

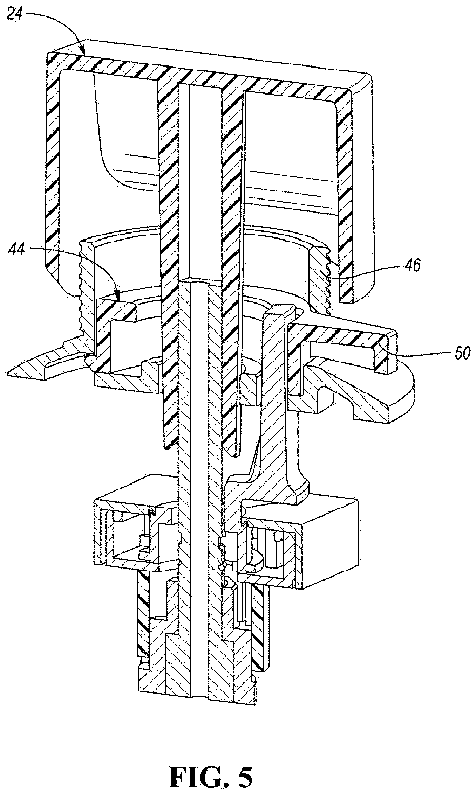

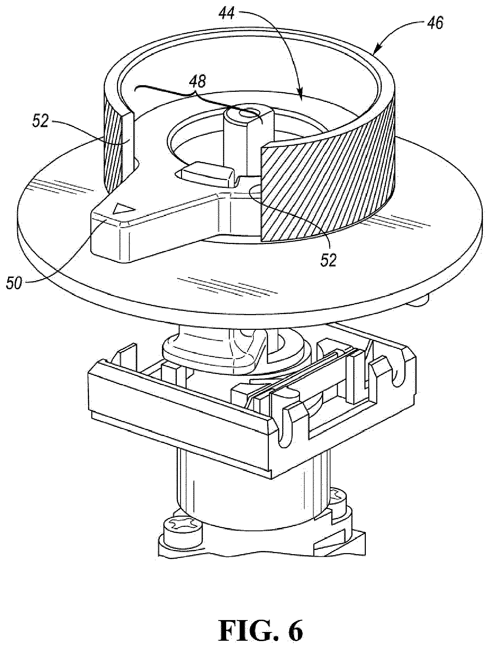

Referring now to Figures 2-6, a gas lockout feature or a main fuel shutoff system 42 is illustrated. The main fuel shutoff system 42 system includes a dial 44 that is configured shut off fuel flow to all of the burners 14. The dial 44 is disposed below one of the knobs 24. More specifically, the associated knob 24 may be the middle or center knob 24 but could be any of the knobs 24. The associated knob 24 covers the dial 44 to effectively hide the dial 44 and prevent the dial from accidental activation via pets, children, etc. More specifically, the dial 44 may be concealed along a top of the dial 4 by the associated knob 24.

The dial 44 is concentric with the associated knob 24. The dial 44 is rotatable about the same axis that the associated knob 24 rotates. However, the dial 44 may be rotatable independently of the associated knob 24. A concentric ring 46 surrounds the dial 44. The concentric ring 46 is also disposed below and concealed by the associated knob 24. More specifically, the concentric ring 46 may be concealed along a top of the concentric ring 46 by the associated knob 24. The concentric ring 46 is partial ring that defines a notch 48. The dial 44 includes a dial arm or a first protrusion 50 that extends radially outward from the remainder of the dial 44. The edges 52 of the concentric ring 46 that define the notch 48 are configured engage the first protrusion 50 upon rotation of the dial 44 to limit the rotational travel of the dial in opposing rotational directions (e.g., clockwise and counterclockwise directions). The dial 44 also includes a stem or second protrusion 54 that extends axially downward from the remainder of the dial 44.

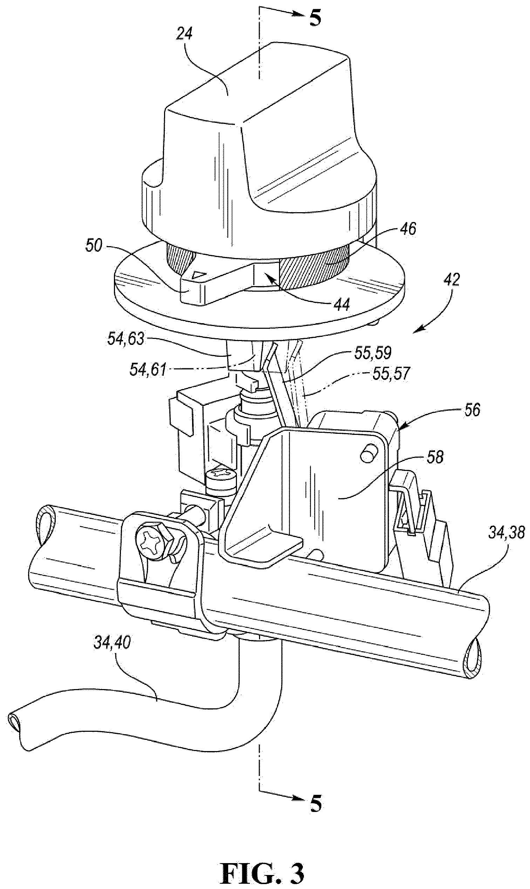

Upon rotation of the dial 44 between first and second positions, the second protrusion 54 activates and deactivates a switch 56 (e.g., a limit switch), respectively. The switch 56 may include a switch arm 55 that is configured to transition between (i) an activated position 57, where the switch 56 is activated or closed, and (ii) a deactivated position 59, where the switch 56 is deactivated or open. Rotation of the dial 44 results in the second protrusion 54 engaging or disengaging the switch arm 55 to transition the switch arm 55 between the activated position 57 and the deactivated position 59, respectively. The second protrusion 54 may engage the switch arm 55 in a first position 61 and disengage the switch arm 55 in a second position 63. The first position 61 of the second protrusion 54 and the activated position 57 of the switch arm 55 are illustrated in phantom lines in Figure 3 for illustrative purposes.

The switch 56 may be secured to a component that is adjacent to the dial 44 and associated knob 24 (e.g., primary line 38) via bracket 58. Activation and deactivation of the switch 56 is then communicated to the controller 26, which operates an actuator 60 to close and open a main shutoff valve 62, respectively. The actuator 60 may be any type of actuator, such and an electric motor or solenoid. The main shutoff valve 62 shuts off or starves the supply of fuel to all of the valves 28 and burners 14 when in the closed position and allows or facilitates the supply of fuel to all of the valves 28 and burners 14 when in the opened position. Alternatively, the switch 56 may directly control the actuator 60 to close and open the main shutoff valve 62 in response to activation and deactivation of the switch 56, respectively, as opposed to the controller 26. In another alternative, the dial 44 may be mechanically linked to the main shutoff valve 62 to directly open and close the main shutoff valve 62 via rotation of the dial 44.

It should be understood that the designations of first, second, third, fourth, etc. for any component, state, or condition described herein may be rearranged in the claims so that they are in chronological order with respect to the claims. Furthermore, it should be understood that any component, state, or condition described herein that does not have a numerical designation may be given a designation of first, second, third, fourth, etc. in the claims if one or more of the specific component, state, or condition are claimed.

The present disclosure may include the following aspects.

In a first aspect, a cooking appliance comprises: a plurality of burners disposed on a cooktop; a plurality of knobs each configured to open and close one of a plurality of supply valves to provide fuel to one of the burners; and a fuel shutoff system disposed below one of the knobs and configured to (i) simultaneously starve each supply valve and each burner of fuel when activated and (ii) simultaneously facilitate delivery of fuel to each supply valve and each burner when deactivated.

In a second aspect according to the first aspect, the fuel shutoff system includes a dial; optionally the dial is positioned concentrically with one of the knobs; optionally the dial is rotatable about a same axis that the associated knob rotates; optionally the dial is rotatable independently of the associated knob.

In a third aspect according to the second aspect, a top of the dial is concealed by a first of the knobs.

In a fourth aspect according to the second or third aspect, the dial is configured to transition via rotation to (i) a first position to activate the fuel shutoff system and (ii) a second position to deactivate the fuel shutoff system.

In a fifth aspect according to any of aspects one to four, the fuel shutoff system includes a main valve.

In a sixth aspect according to aspect five, the main valve is configured to (i) close to starve each supply valve and each burner of fuel and (ii) open to facilitate delivery of fuel to each supply valve and each burner.

In a seventh aspect according to aspect five or six, the fuel shutoff system includes a limit switch, wherein the limit switch is configured to (i) close the main valve when activated and (ii) open the main valve when deactivated.

In an eighth aspect according to aspect seven when aspect five is according to aspect four, the dial is configured to (i) engage and activate the limit switch when in the first position and (ii) disengage and deactivate the limit switch when in the second position.

In a ninth aspect according to aspect two, three, four or eight or according to any of aspects five to seven when aspect five is according to aspect two, three or four, the fuel shutoff system includes a ring disposed around and concentric with the dial.

In a tenth aspect according to aspect nine, the ring defines a notch.

In an eleventh aspect according to aspect ten, the dial includes a protrusion extending radially outward therefrom and into the notch.

In a twelfth aspect according to aspect eleven, the protrusion is configured to engage edges of the ring to limit rotational movement of the dial.

In a thirteenth aspect according to any of aspects nine to twelve, the ring is disposed below a first of the knobs and a top of the ring is concealed by the first of the knobs.

In a fourteenth aspect according to aspect two, three, four, eight, nine, ten, eleven, twelve or thirteen or according to any of aspects five to seven when aspect five is according to aspect two, three or four, the dial includes a protrusion extending downward therefrom.

In a fifteenth aspect according to aspect fourteen when according to aspects seven or eight, the limit switch includes a switch arm that is configured to transition between (i) an activated position, where the limit switch is activated or closed, and (ii) a deactivated position, where the limit switch is deactivated or open; the protrusion extending downward engaging the switch arm in the first position and disengaging the switch arm in the second position.

In a sixteenth aspect according to aspect fifteen or according to aspect fourteen when according to aspect seven or eight, the protrusion extending downward is configured to engage and disengage the limit switch upon rotation of the dial to activate and deactivate the limit switch, respectively.

In a seventeenth aspect according to aspect seven or eight when aspect five is according to aspect four, further comprising a controller, wherein the controller is programmed to, in response to activating the limit switch via transitioning the dial to the first position, close the main valve.

In an eighteenth aspect according to aspect seventeen, the controller is programmed to, in response to deactivating the limit switch via transitioning the dial to the second position, open the main valve.

In a nineteenth aspect according to aspect seventeen or eighteen, the cooking appliance comprises an actuator; the controller operating the actuator to close and open the main valve, respectively.

In a twentieth aspect according to aspect nineteen, the actuator is an electric motor or a solenoid.

## Claims

1. A cooking appliance (10) comprising:
a plurality of burners (14) disposed on a cooktop (12);
a plurality of knobs (24) each configured to open and close one of a plurality of supply valves (28) to provide fuel to one of the burners (14); and
a fuel shutoff system (42) disposed below one of the knobs (24) and configured to (i) simultaneously starve each supply valve (28) and each burner (14) of fuel when activated and (ii) simultaneously facilitate delivery of fuel to each supply valve (28) and each burner (14) when deactivated.

2. The cooking appliance (10) of claim 1, wherein the fuel shutoff system (42) includes a dial (44) that is positioned concentrically with one of the knobs (24).

3. The cooking appliance (10) of claim 2, wherein a top of the dial (44) is concealed by a first of the knobs (24).

4. The cooking appliance (10) of claim 2, wherein the dial (44) is configured to transition via rotation to (i) a first position to activate the fuel shutoff system (42) and (ii) a second position to deactivate the fuel shutoff system (42).

5. The cooking appliance (10) of claim 4, wherein the fuel shutoff system (42) includes a main valve (62), wherein the main valve (62) is configured to (i) close to starve each supply valve (28) and each burner (14) of fuel and (ii) open to facilitate delivery of fuel to each supply valve (28) and each burner (14).

6. The cooking appliance (10) of claim 5, wherein the fuel shutoff system (42) includes a limit switch (56), wherein the limit switch (56) is configured to (i) close the main valve (62) when activated and (ii) open the main valve (62) when deactivated.

7. The cooking appliance (10) of claim 6, wherein the dial (44) is configured to (i) engage and activate the limit switch (56) when in the first position and (ii) disengage and deactivate the limit switch (56) when in the second position.

8. The cooking appliance (10) of claim 7, wherein the fuel shutoff system (42) includes a ring (46) disposed around and concentric with the dial (44), and wherein the ring (46) defines a notch (48).

9. The cooking appliance (10) of claim 8, wherein the dial (44) includes a protrusion (50) extending radially outward therefrom and into the notch (48).

10. The cooking appliance (10) of claim 9, wherein the protrusion (50) is configured to engage edges (52) of the ring (46) to limit rotational movement of the dial (44).

11. The cooking appliance (10) of claim 8, wherein the ring (46) is disposed below a first of the knobs (24) and a top of the ring (46) is concealed by the first of the knobs (24).

12. The cooking appliance (10) of claim 6, wherein the dial (44) includes a protrusion (54) extending downward therefrom.

13. The cooking appliance (10) of claim 12, wherein the protrusion (54) extending downward is configured to engage and disengage the limit switch (56) upon rotation of the dial (44) to activate and deactivate the limit switch (56), respectively.

14. The cooking appliance (10) of claim 6, further comprising a controller (26), wherein the controller (26) is programmed to, in response to activating the limit switch (56) via transitioning the dial (44) to the first position, close the main valve (62).

15. The cooking appliance (10) of claim 14, wherein the controller (26) is programmed to, in response to deactivating the limit switch (56) via transitioning the dial (44) to the second position, open the main valve (62).
